# EUROPEAN PATENT APPLICATION

(11) **EP 4 752 780 A1**
(43) Date of publication of application: **03.06.2026**
(21) Application number: 25180705.3
(22) Date of filing: 04.06.2025
(51) Int. Cl.: G06F 30/398

(54) **DYNAMIC LAYOUT OPTIMIZATION**

(30) Priority: 02.12.2024 US 202418965079
(71) Applicant: GlobalFoundries U.S. Inc., Malta, NY 12020 (US)
(72) Inventor: Kanev, Ivan Krasimirov, 1756 Sofia (BG); Nedev, Nayden Petkov, 1756 Sofia (BG); Feuillette, Romain, 05452 Essex Junction (US)
(74) Representative: Grünecker Patent- und Rechtsanwälte PartG mbB

(57) **Abstract**

The present disclosure relates to layout recommendations and, more particularly, to dynamic layout optimization systems, processes and methods of use. The method includes: determining mismatches between design notes and layout data of an integrated circuit; generating suggestions to correct the mismatches between the design notes and the layout data of the integrated circuit; providing an output of the mismatches between the design notes and the layout data of the integrated circuit including the suggestions; and saving the mismatches and suggestions to a log file.

## Description

### BACKGROUND

The present disclosure relates to layout recommendations and, more particularly, to dynamic layout optimization systems, processes and methods of use.

As process technology improves, device fabrication of integrated circuits becomes more complicated. To meet the challenges of building more complex and higher performance integrated circuits, software tools are used including, for example, computer aided design (CAD), computer aided engineering (CAE), or electronic design automation (EDA) kits.

Also, an integrated circuit may be specified using a netlist and a layout. The netlist provides information about devices or components of the integrated circuit and their connectivity. The integrated circuit layout is the representation of the integrated circuit in terms of geometric shapes, patterns, and features corresponding to a mask used to fabricate the circuit. Some features in the layout or certain masks may be automatically generated, such as automatic placement of elements and automatic routing of these elements.

### SUMMARY

In an aspect of the disclosure, a method comprises: determining mismatches between design notes and layout data of an integrated circuit; generating suggestions to correct the mismatches between the design notes and the layout data of the integrated circuit; providing an output of the mismatches between the design notes and the layout data of the integrated circuit including the suggestions; and saving the mismatches and suggestions to a log file.

In an aspect of the disclosure, a computer program product comprises one or more computer readable storage media having program instructions collectively stored on the one or more computer readable storage media. The program instructions are executable to: parse guidance text notes in a schematic into rules; check the rules against and a corresponding layout to determine matches and mismatches between the rules and the corresponding layout; and generate a report showing whether the parsed guidance text notes are complied within the corresponding layout.

In an aspect of the disclosure, a system comprises: a processor, a computer readable memory, one or more computer readable storage media, and program instructions collectively stored on the one or more computer readable storage media, the program instructions are executable to: extract schematic design notes of an integrated circuit; parse netlist and determine layout geometries of the integrated circuit; compare the layout geometries to the schematic notes to determine mismatches and matches between the layout geometries and the schematic notes; and align design intent with the schematic design based on the comparing of the layout geometries to the schematic notes

### BRIEF DESCRIPTION OF THE DRAWINGS

The present disclosure is described in the detailed description which follows, in reference to the noted plurality of drawings by way of non-limiting examples of exemplary embodiments of the present disclosure.
FIG. 1 depicts a cloud computing node according to an embodiment of the present disclosure.
FIG. 2 shows a block diagram of an exemplary environment in accordance with aspects of the present disclosure.
FIG. 3 shows a general flow diagram in accordance with aspects of the present invention.
FIG. 4 shows an example reporting format (e.g., table) using the general flow diagram of FIG. 3, for example, in accordance with aspects of the present disclosure.
FIG. 5 shows a portion of a reporting format (e.g., table) and graphical representations of the mismatch and design layout in accordance with aspects of the present disclosure.
FIG. 6 shows a flow chart in accordance with aspects of the present disclosure.
FIG. 7 shows a flow chart of a contextual design discrepancy detection (CDDD) to determine a mismatch between design notes and layout data in accordance with aspects of the present disclosure.
FIG. 8 shows a flow chart of custom-formatted discrepancy reporting (CFDR) to provide reporting of mismatched and matched information in accordance with aspects of the present disclosure.
FIG. 9 shows a flow chart of a context-aware correction suggestion (CACS) to generate suggestions in accordance with aspects of the present disclosure.
FIG. 10 shows a flow chart of an artificial intelligence (AI) context-aware process that implements aspects of the present disclosure.
FIG. 11 shows an illustrative SPICE netlist/CDL used with the implementations of the present disclosure.

### DETAILED DESCRIPTION

The present disclosure relates to layout recommendations and, more particularly, to dynamic layout optimization systems, processes and methods of use. More specifically, the present disclosure relates to a dynamic layout optimization method with embedded schematic design recommendations. For example, the processes, systems and computer program products provide for layout checking in which guidance text notes in a schematic may be parsed into rules to check against a corresponding layout. In this way, the process and systems provide layout recommendations by cross-referencing schematic design notes with layout data and generating corrective suggestions to ensure compliance with design intent.

In more specific embodiments, the processes, systems and computer program products described herein (also referred to as a "tool") provide a technical solution to a technical problem. Specifically, in embodiments, the disclosure addresses the issue of layout engineers missing critical design notes from analog design engineers, which are essential for ensuring the proper configuration and matching of devices (e.g., transistors, etc.) during layout creation in design tools, for example. The missing notes can lead to significant performance issues in high-precision circuits. By implementing the processes and systems described herein, though, it is now possible to introduce a unique integration of schematic design notes into the layout phase, providing continuous feedback, predictive suggestions, and context-aware corrective actions. Accordingly, unlike known systems and processes which focus on layout automation or design obfuscation, the present tool (e.g., systems and processes) dynamically cross-references schematic and layout data, detects mismatches, and generates actionable reports.

Advantageously, the dynamic layout optimization method described herein provides faster turnaround time, cost reduction and improved quality. For example, the dynamic layout optimization speeds up the design process (reduced delays) and eliminates the need for layout engineers to switch between schematic and layout views. In addition, the dynamic layout optimization minimizes errors and revisions, cutting down production costs, while also ensuring design precision and reliability, thereby enhancing product performance.

The present disclosure may be a system, a method, and/or a computer program product at any possible technical detail level of integration. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium or media, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flow chart illustrations and/or block diagrams of methods, apparatus (systems), and computer program products according to embodiments of the invention. It will be understood that each block of the flow chart illustrations and/or block diagrams, and combinations of blocks in the flow chart illustrations and/or block diagrams, can be implemented by computer readable program instructions.

These computer readable program instructions may be provided to a processor of a computer, or other programmable data processing apparatus to produce a machine, such that the instructions, which execute via the processor of the computer or other programmable data processing apparatus, create means for implementing the functions/acts specified in the flow chart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flow chart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flow chart and/or block diagram block or blocks.

The flow charts and block diagrams in the Figures illustrate the architecture, functionality, and operation of possible implementations of systems, methods, and computer program products according to various embodiments of the present invention. In this regard, each block in the flow chart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be accomplished as one step, executed concurrently, substantially concurrently, in a partially or wholly temporally overlapping manner, or the blocks may sometimes be executed in the reverse order, depending upon the functionality involved. It will also be noted that each block of the block diagrams and/or flow chart illustration, and combinations of blocks in the block diagrams and/or flow chart illustration, can be implemented by special purpose hardware-based systems that perform the specified functions or acts or carry out combinations of special purpose hardware and computer instructions.

It is to be understood that although this disclosure includes a detailed description on cloud computing, implementation of the teachings recited herein are not limited to a cloud computing environment. Rather, embodiments of the present invention are capable of being implemented in conjunction with any other type of computing environment now known or later developed.

Cloud computing is a model of service delivery for enabling convenient, on-demand network access to a shared pool of configurable computing resources (e.g., networks, network bandwidth, servers, processing, memory, storage, applications, virtual machines, and services) that can be rapidly provisioned and released with minimal management effort or interaction with a provider of the service. This cloud model may include at least five characteristics, at least three service models, and at least four deployment models.

### Characteristics are as follows:

On-demand self-service: a cloud consumer can unilaterally provision computing capabilities, such as server time and network storage, as needed automatically without requiring human interaction with the service's provider.

Broad network access: capabilities are available over a network and accessed through standard mechanisms that promote use by heterogeneous thin or thick client platforms (e.g., mobile phones, laptops, and PDAs).

Resource pooling: the provider's computing resources are pooled to serve multiple consumers using a multi-tenant model, with different physical and virtual resources dynamically assigned and reassigned according to demand. There is a sense of location independence in that the consumer generally has no control or knowledge over the exact location of the provided resources but may be able to specify location at a higher level of abstraction (e.g., country, state, or datacenter).

Rapid elasticity: capabilities can be rapidly and elastically provisioned, in some cases automatically, to quickly scale out and rapidly released to quickly scale in. To the consumer, the capabilities available for provisioning often appear to be unlimited and can be purchased in any quantity at any time. In embodiments, the models implemented on the cloud are scalable.

Measured service: cloud systems automatically control and optimize resource use by leveraging a metering capability at some level of abstraction appropriate to the type of service (e.g., storage, processing, bandwidth, and active user accounts). Resource usage can be monitored, controlled, and reported providing transparency for both the provider and consumer of the utilized service.

### Service Models are as follows:

Software as a Service (SaaS): the capability provided to the consumer is to use the provider's applications running on a cloud infrastructure. The applications are accessible from various client devices through a thin client interface such as a web browser (e.g., web-based e-mail). The consumer does not manage or control the underlying cloud infrastructure including network, servers, operating systems, storage, or even individual application capabilities, with the possible exception of limited user-specific application configuration settings.

Platform as a Service (PaaS): the capability provided to the consumer is to deploy onto the cloud infrastructure consumer-created or acquired applications created using programming languages and tools supported by the provider. The consumer does not manage or control the underlying cloud infrastructure including networks, servers, operating systems, or storage, but has control over the deployed applications and possibly application hosting environment configurations.

Infrastructure as a Service (IaaS): the capability provided to the consumer is to provision processing, storage, networks, and other fundamental computing resources where the consumer is able to deploy and run arbitrary software, which can include operating systems and applications. The consumer does not manage or control the underlying cloud infrastructure but has control over operating systems, storage, deployed applications, and possibly limited control of select networking components (e.g., host firewalls).

### Deployment Models are as follows:

Private cloud: the cloud infrastructure is operated solely for an organization. It may be managed by the organization or a third party and may exist on-premises or off-premises.

Community cloud: the cloud infrastructure is shared by several organizations and supports a specific community that has shared concerns (e.g., mission, security requirements, policy, and compliance considerations). It may be managed by the organizations or a third party and may exist on-premises or off-premises.

Public cloud: the cloud infrastructure is made available to the general public or a large industry group and is owned by an organization selling cloud services.

Hybrid cloud: the cloud infrastructure is a composition of two or more clouds (private, community, or public) that remain unique entities but are bound together by standardized or proprietary technology that enables data and application portability (e.g., cloud bursting for load-balancing between clouds).

A cloud computing environment is service oriented with a focus on statelessness, low coupling, modularity, and semantic interoperability. At the heart of cloud computing is an infrastructure that includes a network of interconnected nodes.

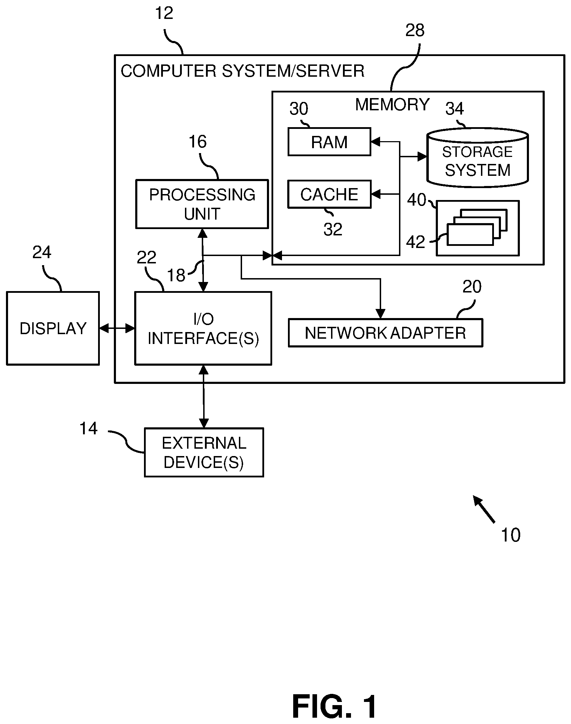

Referring now to FIG. 1, a schematic of an example of a cloud computing node is shown. Cloud computing node 10 is only one example of a suitable cloud computing node and is not intended to suggest any limitation as to the scope of use or functionality of embodiments of the invention described herein. Regardless, cloud computing node 10 is capable of being implemented and/or performing any of the functionality set forth hereinabove.

In cloud computing node 10 there is a computer system/server 12, which is operational with numerous other general purpose or special purpose computing system environments or configurations. Examples of well-known computing systems, environments, and/or configurations that may be suitable for use with computer system/server 12 include, but are not limited to, personal computer systems, server computer systems, thin clients, thick clients, hand-held or laptop devices, multiprocessor systems, microprocessor-based systems, set top boxes, programmable consumer electronics, network PCs, minicomputer systems, mainframe computer systems, and distributed cloud computing environments that include any of the above systems or devices, and the like.

Computer system/server 12 may be described in the general context of computer system executable instructions, such as program modules, being executed by a computer system. Generally, program modules may include routines, programs, objects, components, logic, data structures, and so on that perform particular tasks or implement particular abstract data types. Computer system/server 12 may be practiced in distributed cloud computing environments where tasks are performed by remote processing devices that are linked through a communications network. In a distributed cloud computing environment, program modules may be located in both local and remote computer system storage media including memory storage devices.

As shown in FIG. 1, computer system/server 12 in cloud computing node 10 is shown in the form of a general-purpose computing device. The components of computer system/server 12 may include, but are not limited to, one or more processors or processing units 16, a system memory 28, and a bus 18 that couples various system components including system memory 28 to processor 16.

Bus 18 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnects (PCI) bus.

Computer system/server 12 typically includes a variety of computer system readable media. Such media may be any available media that is accessible by computer system/server 12, and it includes both volatile and non-volatile media, removable and non-removable media.

System memory 28 can include computer system readable media in the form of volatile memory, such as random access memory (RAM) 30 and/or cache memory 32. Computer system/server 12 may further include other removable/non-removable, volatile/non-volatile computer system storage media. By way of example only, storage system 34 can be provided for reading from and writing to a non-removable, non-volatile magnetic media (not shown and typically called a "hard drive"). Although not shown, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided. In such instances, each can be connected to bus 18 by one or more data media interfaces. As will be further depicted and described below, memory 28 may include at least one program product having a set (e.g., at least one) of program modules that are configured to carry out the functions of embodiments of the invention.

Program/utility 40, having a set (at least one) of program modules 42, may be stored in memory 28 by way of example, and not being a limitation, as well as an operating system, one or more application programs, other program modules, and program data. Each of the operating systems, one or more application programs, other program modules, and program data or some combination thereof, may include an implementation of a networking environment. Program modules 42 generally carry out the functions and/or methodologies of embodiments of the invention as described herein.

Computer system/server 12 may also communicate with one or more external devices 14 such as a keyboard, a pointing device, a display 24, etc.; one or more devices that enable a user to interact with computer system/server 12; and/or any devices (e.g., network card, modem, etc.) that enable computer system/server 12 to communicate with one or more other computing devices. Such communication can occur via Input/Output (I/O) interfaces 22. Still yet, computer system/server 12 can communicate with one or more networks such as a local area network (LAN), a general wide area network (WAN), and/or a public network (e.g., the Internet) via network adapter 20. As depicted, network adapter 20 communicates with the other components of computer system/server 12 via bus 18. It should be understood that although not shown, other hardware and/or software components could be used in conjunction with computer system/server 12. Examples, include, but are not limited to: microcode, device drivers, redundant processing units, external disk drive arrays, RAID systems, tape drives, and data archival storage systems, etc.

As should be understood by those of skill in the art, a cloud computing environment includes one or more cloud computing nodes 10 with which local computing devices used by cloud consumers. Nodes 10 may communicate with one another. They may be grouped (not shown) physically or virtually, in one or more networks, such as Private, Community, Public, or Hybrid clouds as described hereinabove, or a combination thereof. This allows cloud computing environment to offer infrastructure, platforms and/or software as services for which a cloud consumer does not need to maintain resources on a local computing device. The model described herein may be scalable with the cloud computing environment.

In embodiments, the computer system/server 12 may comprise different modules to perform the functions described herein, including, for example,
(i) Real-time integration of schematic notes into the layout environment, linked to specific devices;
(ii) Continuous verification of layout adherence to design recommendations and criteria (e.g., matching of transistors in current mirrors);
(iii) Predictive feedback on the consequences of not meeting design recommendations, such as asymmetry in high-precision current mirrors leading to unequal etching and performance issues;
(iv) Generation and display of design notes alongside relevant layout objects (e.g., transistors, resistors, capacitors, inductors);
(v) Context-aware guidance that dynamically updates based on the layout engineer's current focus area within the Cadence Virtuoso environment; and
(vi) Real-time feedback mechanism that alerts layout engineers if design criteria are not being met during the layout process.

As further described herein, the systems and processes described can provide the above functionality through transformation scripts which convert schematic design notes into a format suitable for comparison with the layout data, and design recommendation algorithms that analyze the schematic and layout comparison results. Based on the analysis, the system generates actionable recommendations to correct any mismatches or potential issues in the layout.

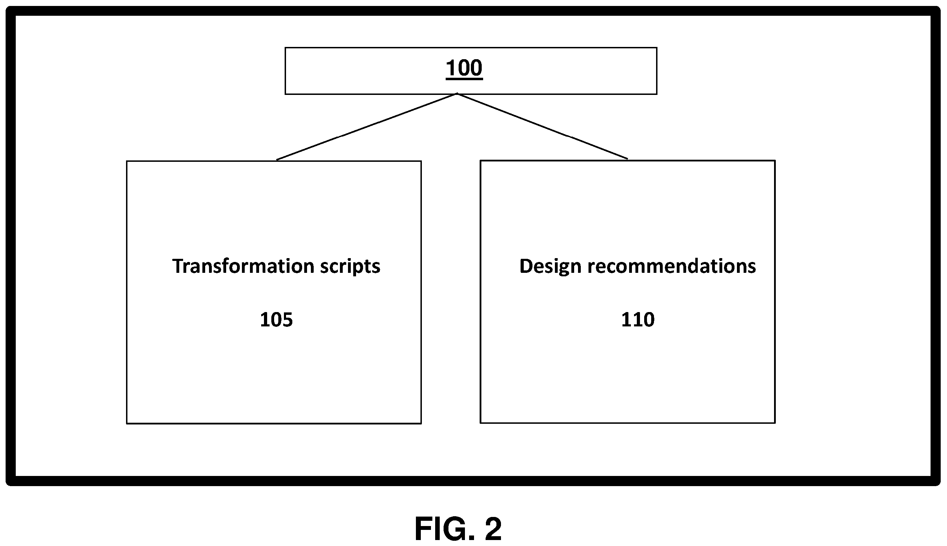

FIG. 2 shows a block diagram of an exemplary environment in accordance with aspects of the invention. In embodiments, the environment includes at least one processing tool 100, e.g., schematic to layout verification tool 100, in communication with the computer system/server 12 or FIG. 1. The processing tool 100 may verify and optimize IC layouts by cross-referencing schematic design notes with layout data, using transformation scripts and rule-based algorithms to detect discrepancies and provide corrective suggestions, ensuring alignment with design intent and improving the accuracy and efficiency of the design process.

More specifically, the processing tool 100 can be implemented through transformation scripts which convert schematic design notes into a format suitable for comparison with the layout data, and design recommendation algorithms that analyze the schematic and layout comparison results. Based on the analysis, the system generates actionable recommendations to correct any mismatches or potential issues in the layout. By way of example, the processing tool 100 may communicate with and/or include a transformation script module 105 and a design recommendations module 110. The transformation scripts module 105 may transform scripts from different netlist; whereas the design recommendations module 110 may make recommendations using the actual design layout and the transformation of the scripts.

As should be understood by those of skill in the art, a netlist is a textual representation of an electronic circuit that describes how its components are connected. It may be a fundamental part of electronic design, similar to a circuit's source code, and is used to ensure the accuracy of code.

### The netlists may be used in a variety of ways, including:

(i) Managing code: Netlists are used to manage code for printed circuit boards (PCBs);
(ii) Laying out components: Netlists are used to lay out each component and its connections on the PCB;
(iii) Ensuring accuracy: Netlists are used to ensure the accuracy of any code; and/or
(iv) Bare board testing: Netlists are used by bare board fabricators to compare the connectivity of the finished board to the input data.

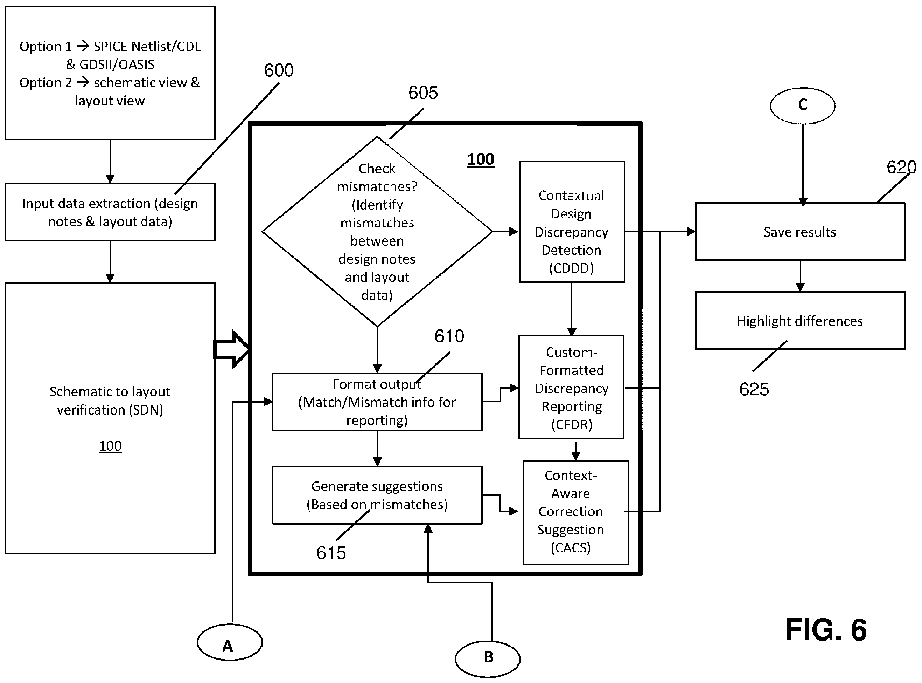

In more specific embodiments, the transformation scripts module 105 may transform a script by, for example, parsing the script, extracting the circuit components and their connections, and generating a text file in a standard netlist format (e.g., SPICE) which describes the circuit topology by listing each component with its corresponding nodes, essentially translating the script's logic into a format that a circuit simulator can understand. The design recommendations module 110 may make recommendations by comparing the actual design layout to the transformed script as further described herein and particularly with respect to FIGS. 6-9.

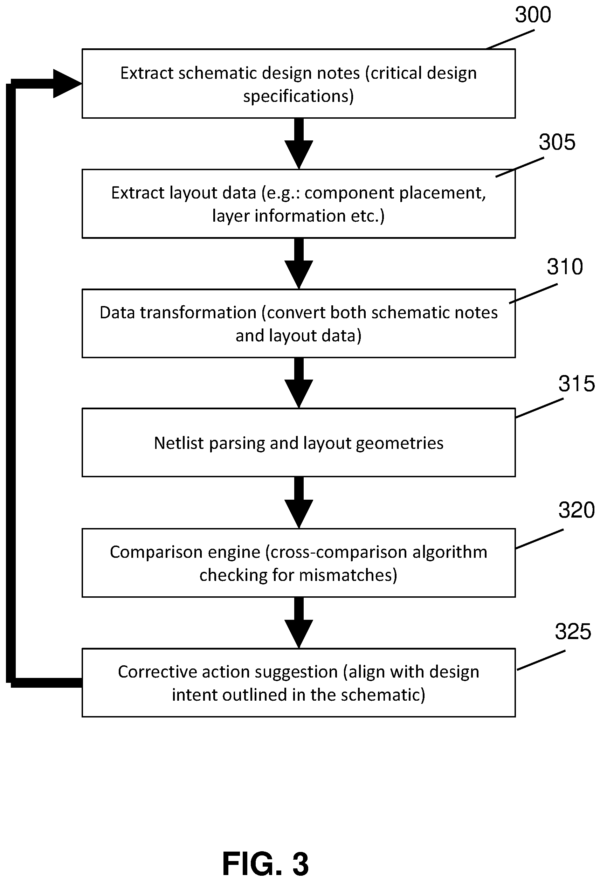

FIG. 3 shows a general flow diagram in accordance with aspects of the present disclosure. At step 300, the processes extract schematic design notes. This may include critical design specifications. At step 305, the processes extract layout data. This may include component placements, layer information and other layout information. At step 310, the processes provide data transformation. This may include converting both the schematic notes and layout data.

At step 315, the processes perform netlist parsing and determine layout geometries. At step 320, the processes compare the layout geometries to the schematic notes, e.g., critical aspects of the design. This may be performed by cross-comparison algorithm tracking for mismatches between the layout geometries and the intended design, e.g., from the layout data. At step 325, the processes take corrective action. This may include aligning the design intent with the schematic itself, e.g., making suggestions to correct any issues with the layout geometry. The processes will continue again at step 305.

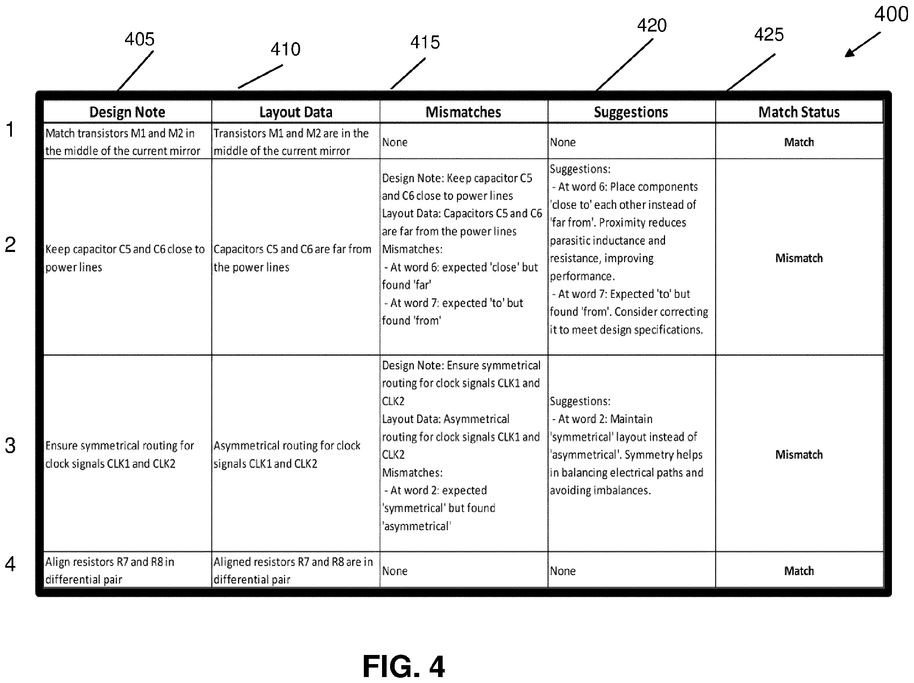

FIG. 4 shows an example reporting format (e.g., table) using the general flow diagram of FIG. 3, for example. The example table 400 in FIG. 4 includes several columns: design note 405, layout data 410, mismatches 415, suggestions 420, and match status 425. In examples, the table 400 shows that there is a mismatch between the design notes 405 and layout data 410 in rows 2, 3 and 5. On the other hand, a match was found between the design notes 405 and layout data 410 in both rows 1 and row 4. Illustratively, in row 2, the design notes 405 include "Keep capacitor C5 and C6 close to power lines" and layout data 410 notes "Capacitors C5 and C6 are far from the power lines". The processes of the present disclosure will note this mismatch in row 415 and make suggestions in row 420.

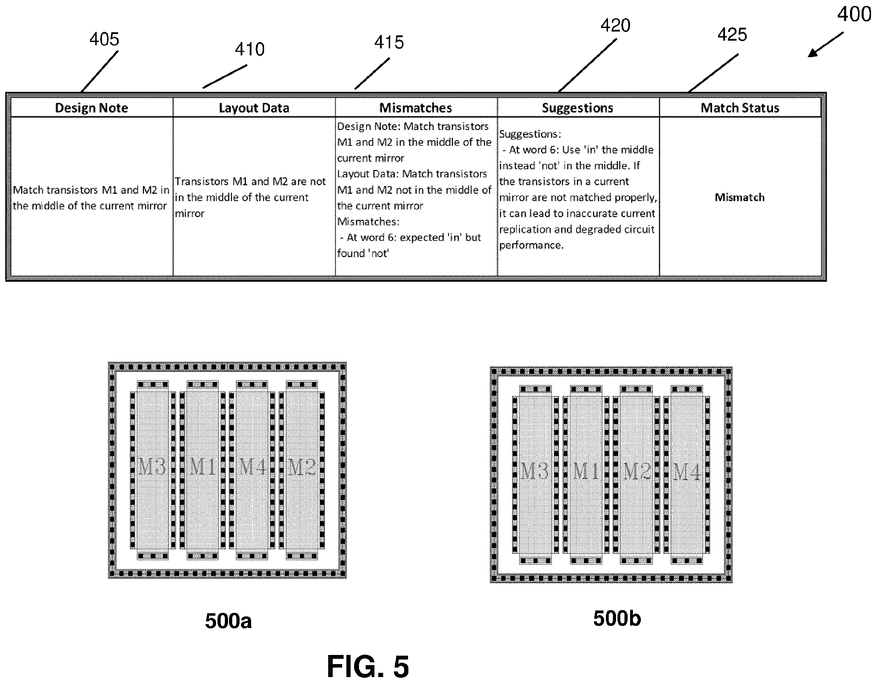

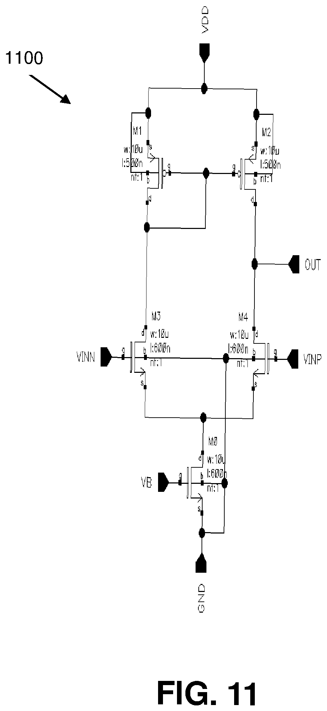

By way of another example, FIG. 5 shows a portion of a reporting format (e.g., table) and graphical representations of the mismatch and the design layout in accordance with aspects of the present disclosure. In this example, the design notes 405 include "Match transistors M1 and M2 in the middle of the current mirror" and layout data 410 notes "Transistors M1 and M2 are not in the middle of the current mirror". The layout 500a represents the design notes and the layout 500b represents the layout view. These layouts (and other examples) may be graphically represented in the report as described herein. FIG. 5 also shows the graphical representation 500b, which is representative of the SPICE netlist/CDL circuitry 1100 of FIG. 11.

FIG. 6 shows a flow chart in accordance with aspects of the present disclosure. In particular, FIG. 6 shows processing steps associated with the block diagram of FIG. 2 and more specifically, the processes performed by the schematic to layout verification tool 100. As should be understood by those of skill in the art, the schematic to layout verification tool 100 represents the process of transforming schematic and layout data into comparable formats, applying rule-based algorithms to check for discrepancies, and ensuring that the layout adheres to the design intent as specified in the schematic. The tool 100 checks component matches, correct connections, and parameter compliance, generating suggestions for corrective actions if needed and as described in more detail herein.

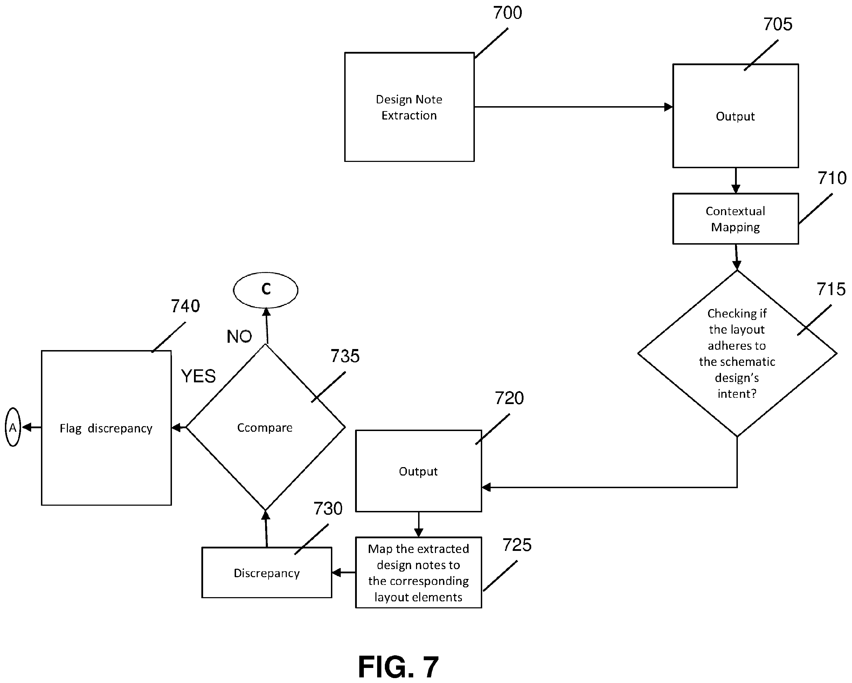

In the flow chart of FIG. 6, two options, amongst others, may be available for data input: (i) SPICE Netlist/CDL and GDSII/OASIS; and (ii) schematic view and layout view. FIG. 11 shows an illustrative SPICE netlist/CDL 1100. The data extraction (design notes and layout data) will be put into the schematic to layout verification tool 100 at step 600. The schematic to layout verification tool 100 will use this information to determine if there is a mismatch between the design notes and layout data at step 605. The determination of match of mismatch may be provided by a contextual design discrepancy detection (CDDD) as shown and described in FIG. 7.

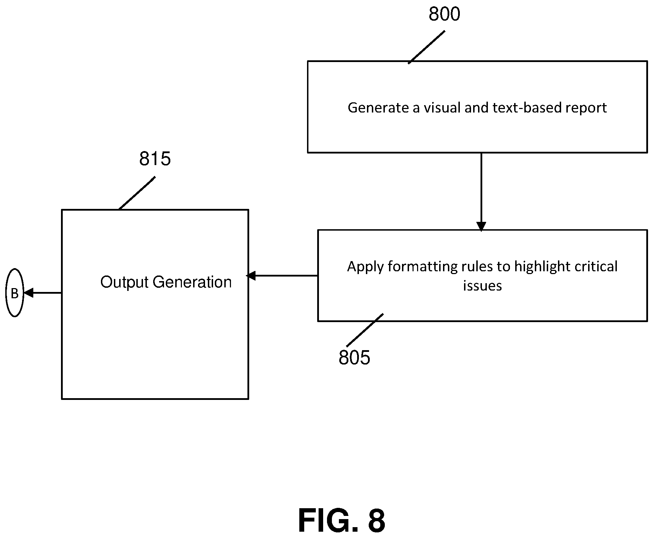

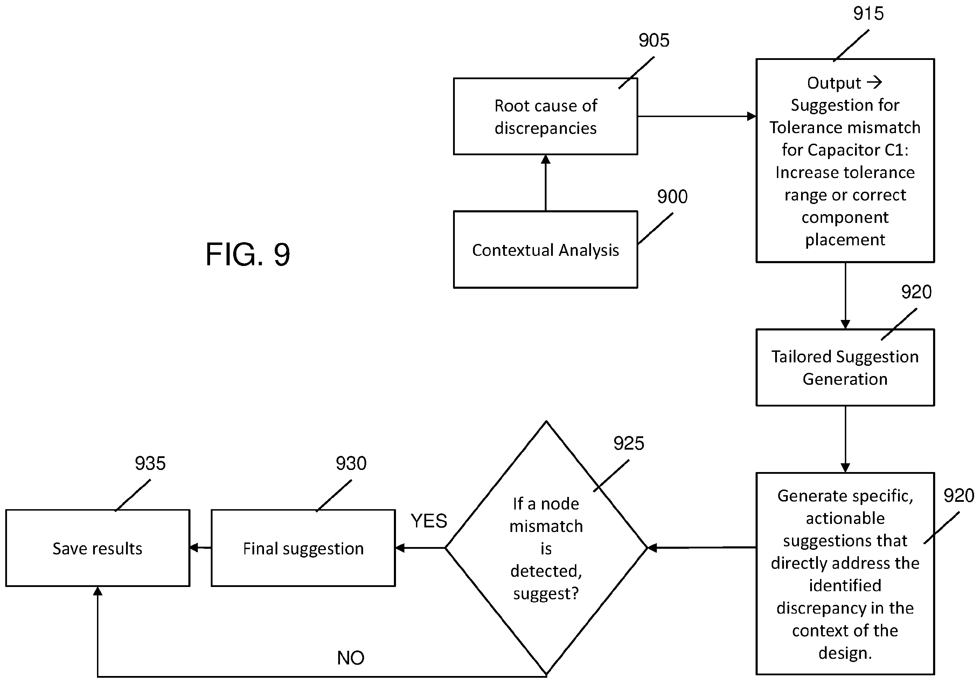

At step 610, the processes format the output, e.g., provide the mismatched and matched information into a reporting as shown in FIG. 4, for example. This processing step can be accomplished by the custom-formatted discrepancy reporting (CFDR) as shown and described in FIG. 8. At step 615, the processes generate suggestions based on the mismatches. This processing step can be accomplished by the context-aware correction suggestion (CACS) as shown and described in FIG. 9. At step 620, the results, e.g., including mismatches and suggestions, of the processing steps 605, 610, 615 are saved to a log file. This step ensures that all the processed data, identified issues, and suggested corrections are documented and stored properly. At step 625, the processes will highlight the differences, e.g., matches and mismatches as shown in FIGS. 4 and 5, for example. In this way, it is possible to provide predictive feedback on consequences of not meeting design recommendations.

FIG. 7 shows a flow chart of a contextual design discrepancy detection (CDDD) to determine if there is a mismatch between the design notes and layout data in accordance with aspects of the present disclosure. The processes described herein identify mismatches between a schematic design and its corresponding layout by understanding and analyzing the context of design notes.

For example, at step 700 the processes extract design notes. This can include, for example, electrical specifications, component requirements and connectivity rules. At step 705, the processes provide an output. As an example, an output may be "[{'component': 'Capacitor C1', 'node1': 'A', 'node2': 'B', 'tolerance': '5%'}]."

At step 710 , the processes provide a contextual mapping of the output. In embodiments, the context mapping is a technique used in data processing and analytics to organize, link, and visualize relationships between data objects, often in the form of domain-driven design.

At step 715, the processes check to determine if the layout adheres to the schematic design intent. At step 720, the processes output a result, e.g., mismatch or match. In embodiments, the output may be, for example, whether there mismatch is within a tolerance, e.g., capacitor C1 is within 5% of its design parameters.

At step 725, the processes map the extracted design notes to the corresponding layout elements. At step 730, the processes determine whether there is any discrepancy between the extracted design notes and the corresponding layout elements. At step 735, the processes make a comparison between the expected design and the parameters. If the comparison is not above a certain threshold or is determined to be inconsequential (e.g., minimal impact), the processes end and all results are saved as described with respect to step 620 of FIG. 6.

If the comparison is above a certain threshold or is not inconsequential, at step 740, the processes flag any discrepancies that are over a certain threshold, for example. By way of an illustrative example, the processes may flag a discrepancy if it is determined that a capacitor in the layout is connected between different nodes or the tolerance exceeds a certain threshold e.g., 5%. The processes then proceed to step 610 of FIG. 6 (which is described in more detail with respect to FIG. 8). In this way, the processes provide continuous verification of layout adherence to design recommendations.

FIG. 8 shows a flow chart of a custom-formatted discrepancy reporting (CFDR) to provide reporting of the mismatched and matched information in accordance with aspects of the present disclosure. For example, the processes described in FIG. 8 may generate a visual and text based report that is easily interpreted and can be acted upon by implementing, for example, certain suggestions.

By way of example, at step 800, the processes generate a visual and text based report. The report may be generated by gathering the data, then by using conventional data visualization tools (e.g., dedicated data visualization platforms), create charts, graphs and tables that illustrate the matches, mismatches and other data points described herein, while writing descriptive text to explain the data and insights within the visuals, ensuring a cohesive narrative.

At step 805, the processes may apply formatting rules to highlight critical issues. At step 810, the report can be output to the user. These reports can be representative of the tables shown in FIGS. 4 and 5. These reports may show critical discrepancies and tolerance mismatches, which may be highlighted. An illustrative report may be, "'Critical': [], 'Non-Critical': ['Tolerance mismatch for Capacitor C1']" The processes then proceed to step 615 of FIG. 6 (which is described in more detail with respect to FIG. 9).

FIG. 9 shows a flow chart of a context-aware correction suggestion (CACS) to generate suggestions in accordance with aspects of the present disclosure. For example, FIG. 9 specifically shows a process flow of generating correction suggestions based on the discrepancies identified, considering the design's context.

Specifically, at step 900, the processes perform a contextual analysis. As previously noted, a context analysis is a method for understanding the environment in which something operates, and how the different elements of that environment fit together. At step 905, the processes determine and generate root causes of any discrepancies. The root causes can be tolerance mismatches manufacturing variations, etc.

At step 915, the processes provide an output. The output may be related to any of the found discrepancies. For example, the output may be a suggestion for tolerance mismatch for a particular feature of a design, i.e., a capacitor. This suggestion may be to increase a tolerance range or correct a component placement.

At step 920, the processes may generate a tailored suggestion from the output. At step 925, the processes will determine if there a node mismatch detected and a suggestion available. If none, the processes proceed to step 935, at which time the actionable suggestions is saved. At step 925, if there is a node mismatch that is detected and suggestion provided, the processes continue to step 930. At step 930, a final suggestion may be made. The final suggestions may be, for example:

"Suggestions: At word 6: Place components 'close to' each other instead of 'far from'. Proximity reduces parasitic inductance and resistance, improving performance. At word 7: Expected 'to' but found 'from'. Consider correcting it to meet design specifications.

Suggestions: At word 2: Maintain 'symmetrical' layout instead of 'asymmetrical'. Symmetry helps in balancing electrical paths and avoiding imbalances.

Suggestions: At word 2: Use 'thick' metal layers instead of 'thin'. Thicker metal layers reduce resistance and enhance current-carrying capacity.'

The final suggestion may be saved at step 930.

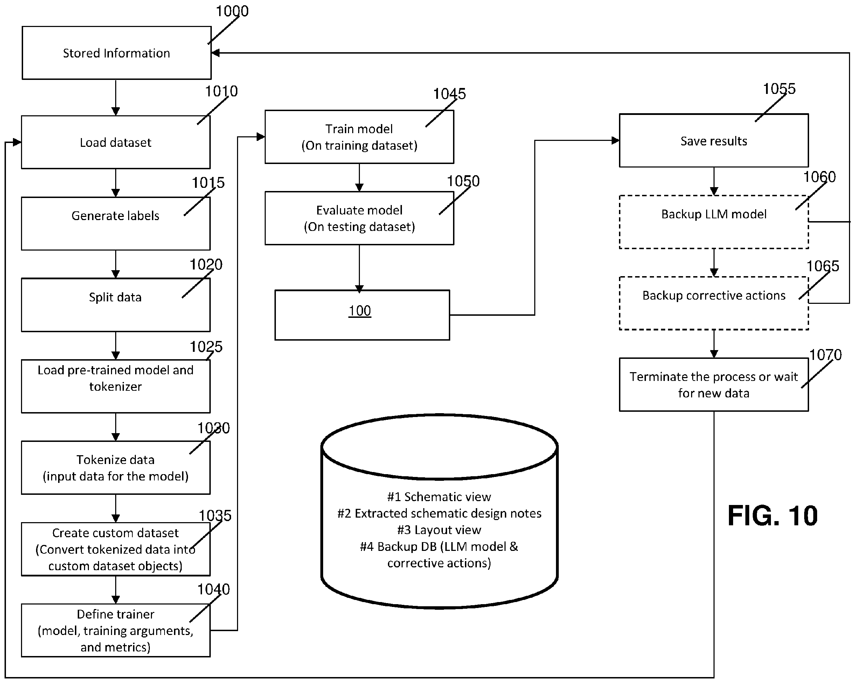

FIG. 10 shows an artificial intelligence (AI) context-aware processes that implement aspects of the present disclosure. These steps may be used to formulate suggestions based on discrepancies and past experiences, as examples.

At step 1000, the processes load a dataset. The dataset may include, for example, schematic views, extracted schematic design notes, layout views, backup databases including LLM models and corrective actions, etc. At step 1015, the processes generate labels from the datasets. For example, "1" may be a match layout and "0" may be an incorrect layout. At step 1020, the processes split the data into training and test data. The data may be split in various ways including, for example, 80% of the data being training data and 20% of the data being test data. At step 1025, the processes load pretrained data into the model and perform tokenization. For example, the pretrained data may be "DistilBERT-base-uncased" LLM model, as one non-limiting example.

At step 1030, the processes tokenize the data. For example, input data for the model may be tokenized. At step 1035, the processes customize the dataset. This may include, for example, converting tokenized data into custom data set objects. At step 1040, the processes define a trainer. This may include model, training arguments and metrics. At step 1045, the processes train the model on the training dataset.

At step 1050, the processes provided by the schematic to layout verification tool 100 as shown in FIGS. 6-9. At step 1055, data will be saved. At step 1060, the processes optionally back-up the LLM model (e.g., if the primary model fails). At step 1065, the processes optionally back-up the corrective actions (e.g., if the primary fails). At step 1070, the processes terminate or wait for new data. The processes can revert back to step 1010 for loading of a new or updated dataset and continue with the processes as described herein..

FIG. 11 shows an illustrative SPICE netlist/CDL 1100. For example, the SPICE netlist/CDL 1100 may be a circuit diagram 100 which shows a match of transistors M1 and M2 in the middle of a current mirror. This is also shown graphically in FIG. 5, for example, at reference numeral 500b.

### Example Use Case #1:

In a differential amplifier circuit, schematic notes specify the following: ensuring symmetrical matching of the transistors in the differential pair; shielding output signals to prevent coupling and performance degradation; placing symmetrical terminals to maintain balance; and using guard rings around sensitive components to reduce latch-up risks. The tool displays these recommendations in real-time and continuously verifies that the layout adheres to these guidelines. If the layout does not meet these criteria, the tool will alert the engineer and suggest corrections.

### Example Use Case #2:

In a precision current mirror circuit, schematic notes specify the following: ensuring that transistors in the current mirror are matched in size and layout to minimize offset; keeping the layout symmetrical to prevent performance degradation; and using dummy transistors at the edges of the array to ensure uniform etching and reduce edge effects. The tool ensures these recommendations are followed during layout and provide immediate feedback if any issues arise, suggesting potential layout adjustments to maintain symmetry and matching.

### Example Use Case #3:

For a high-frequency amplifier block, the schematic includes notes on: minimizing parasitic capacitance by avoiding long interconnects; using thick metals for signal paths to reduce resistance; and ensuring adequate spacing between signal lines to prevent crosstalk. The tool monitors the layout process and notify the engineer if any design choices increase parasitic effects or crosstalk, recommending optimized routing paths.

### Example Use Case #4:

In a power management IC, schematic notes highlight: ensuring that power transistors have proper heat sinking and thermal relief structures; using multiple vias for high-current paths to reduce resistance and inductance; and keeping analog and digital ground planes separated to minimize noise coupling. The tool provides real-time feedback on these aspects, alerting the layout engineer if thermal management or noise isolation guidelines are not being met.

The methods described herein can be utilized in system on chip (SoC) technology. The SoC is an integrated circuit (also known as a "chip") that integrates all components of an electronic system on a single chip or substrate. As the components are integrated on a single substrate, SoCs consume much less power and take up much less area than multi-chip designs with equivalent functionality. Because of this, SoCs are becoming the dominant force in the mobile computing (such as in Smartphones) and edge computing markets. SoC is also used in embedded systems and the Internet of Things.

The method(s) as described above is used in the fabrication of integrated circuit chips. The resulting integrated circuit chips can be distributed by the fabricator in raw wafer form (that is, as a single wafer that has multiple unpackaged chips), as a bare die, or in a packaged form. In the latter case the chip is mounted in a single chip package (such as a plastic carrier, with leads that are affixed to a motherboard or other higher level carrier) or in a multichip package (such as a ceramic carrier that has either or both surface interconnections or buried interconnections). In any case the chip is then integrated with other chips, discrete circuit elements, and/or other signal processing devices as part of either (a) an intermediate product, such as a motherboard, or (b) an end product. The end product can be any product that includes integrated circuit chips, ranging from toys and other low-end applications to advanced computer products having a display, a keyboard or other input device, and a central processor.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

In summary, the present disclosure relates to layout recommendations and, more particularly, to dynamic layout optimization systems, processes and methods of use. The method includes: determining mismatches between design notes and layout data of an integrated circuit; generating suggestions to correct the mismatches between the design notes and the layout data of the integrated circuit; providing an output of the mismatches between the design notes and the layout data of the integrated circuit including the suggestions; and saving the mismatches and suggestions to a log file.

The following embodiments are explicitly disclosed.
Embodiment 1:
   A method comprising:
   determining mismatches between design notes and layout data of an integrated circuit;
   generating suggestions to correct the mismatches between the design notes and the layout data of the integrated circuit;
   providing an output of the mismatches between the design notes and the layout data of the integrated circuit including the suggestions; and
   saving the mismatches and suggestions to a log file.
Embodiment 2:
   The method of embodiment 1, wherein the determining the mismatches comprises:
   identifying the mismatches between a schematic design and its corresponding layout by analyzing context of the design notes;
   extracting the design notes;
   providing a contextual mapping of the output including mapping the extracted design notes to the corresponding layout elements; and
   determining that the layout adheres to an intent the schematic design.
Embodiment 3:
   The method of embodiment 2, wherein the design notes comprise at least one of electrical specifications, component requirements or connectivity rules.
Embodiment 4:
   The method of embodiment 2 or 3, wherein the contextual mapping comprises visualizing relationships between the design notes and the layout data.
Embodiment 5:
   The method of one of embodiments 2 to 4, further comprising determining any discrepancy between the extracted design notes and the corresponding layout elements and making a comparison between an expected design and parameters of the corresponding layout elements.
Embodiment 6:
   The method of embodiment 5, further comprising flagging the discrepancies that are above a predefined threshold.
Embodiment 7:
   The method of one of embodiments 1 to 6, further comprising reporting the mismatched and matched output and the suggestions.
Embodiment 8:
   The method of embodiment 7, wherein the reporting comprises generating a visual and text based report to implement the suggestions.
Embodiment 9:
   The method of embodiment 7 or 8, wherein the reporting comprises providing a graphic layout of the suggestion.
Embodiment 10:
   The method of one of embodiments 7 to 9, wherein the reporting comprises applying formatting rules to highlight critical issues in the integrated circuit.
Embodiment 11:
   The method of one of embodiments 1 to 10, wherein the generating suggestions comprises:
   performing a contextual analysis of at least the design notes;
   determining root causes of any discrepancies including at least tolerance mismatches and manufacturing variations; and
   generating tailored actionable suggestions related to the discrepancies.
Embodiment 12:
   A computer program product comprising one or more computer readable storage media having program instructions collectively stored on the one or more computer readable storage media, the program instructions are executable to:
   parse guidance text notes in a schematic into rules;
   check the rules against and a corresponding layout to determine matches and mismatches between the rules and the corresponding layout; and
   generate a report showing whether the parsed guidance text notes are complied within the corresponding layout.
Embodiment 13:
   The computer program product of embodiment 12, further comprising real-time integration of the schematic into a layout environment, linked to specific integrated circuits.
Embodiment 14:
   The computer program product of embodiment 12 or 13, further comprising continuous verification of layout adherence to design recommendations.
Embodiment 15:
   The computer program product of one of embodiments 12 to 14, further comprising predictive feedback on consequences of not meeting design recommendations.
Embodiment 16:
   The computer program product of one of embodiments 12 to 15, further comprising generation and display of design notes alongside relevant layout objects.
Embodiment 17:
   A system comprising:
   a processor, a computer readable memory, one or more computer readable storage media, and program instructions collectively stored on the one or more computer readable storage media, the program instructions are executable to:
   extract schematic design notes of an integrated circuit;
   parse a netlist and determine layout geometries of the integrated circuit;
   compare the layout geometries to the schematic notes to determine mismatches and matches between the layout geometries and the schematic notes; and
   align design intent with the schematic design based on the comparing of the layout geometries to the schematic notes.
Embodiment 18:
   The system of embodiment 17, wherein the comparing of the layout geometries to the schematic notes comprises utilizing a cross-comparison algorithm tracking for mismatches between the layout geometries and an intended design.
Embodiment 19:
   The system of embodiment 17 or 18, wherein the extracting comprises extracting critical design specifications including layout data of the integrated circuit.
Embodiment 20:
   The system of embodiment 19, wherein the critical design specifications include at least one of component placements or layer information and other layout information.
Embodiment 21:
   A computer program product comprising one or more computer readable storage media having program instructions collectively stored on the one or more computer readable storage media, the program instructions are executable to execute the method of one embodiments 1 to 11.
Embodiment 22:
   A system comprising:
   a processor, a computer readable memory, one or more computer readable storage media, and program instructions collectively stored on the one or more computer readable storage media, the program instructions are executable to execute the method of one of embodiments 1 to 11.
Embodiment 23:
   A method, comprising:
   parsing guidance text notes in a schematic into rules;
   checking the rules against and a corresponding layout to determine matches and mismatches between the rules and the corresponding layout; and
   generating a report showing whether the parsed guidance text notes are complied within the corresponding layout.
Embodiment 24:
   The method of embodiment 23, further comprising real-time integrating the schematic into a layout environment, linked to specific integrated circuits.
Embodiment 25:
   The method of embodiment 23 or 24, further comprising continuously verifying of layout adherence to design recommendations.
Embodiment 26:
   The method of one of embodiments 23 to 25, further comprising providing predictive feedback on consequences of not meeting design recommendations.
Embodiment 27:
   The method of one of embodiments 23 to 26, further comprising generating and displaying of design notes alongside relevant layout objects.
Embodiment 28:
   The method of one of embodiments 23 to 27 in combination with one of embodiments 1 to 11.
Embodiment 29:
   A method, comprising:
   extracting schematic design notes of an integrated circuit;
   parsing a netlist and determine layout geometries of the integrated circuit;
   comparing the layout geometries to the schematic notes to determine mismatches and matches between the layout geometries and the schematic notes; and
   aligning design intent with the schematic design based on the comparing of the layout geometries to the schematic notes.
Embodiment 30:
   The method of embodiment 29, wherein the comparing of the layout geometries to the schematic notes comprises utilizing a cross-comparison algorithm tracking for mismatches between the layout geometries and an intended design.
Embodiment 31:
   The method of embodiment 29 or 30, wherein the extracting comprises extracting critical design specifications including layout data of the integrated circuit.
Embodiment 32:
   The system of embodiment 31, wherein the critical design specifications include at least one of component placements or layer information and other layout information.
Embodiment 33
   The method of one of embodiments 29 to 32 in combination with one of embodiments 1 to 11 and/or 23 to 28.

## Claims

1. A method comprising:
determining mismatches between design notes and layout data of an integrated circuit;
generating suggestions to correct the mismatches between the design notes and the layout data of the integrated circuit;
providing an output of the mismatches between the design notes and the layout data of the integrated circuit including the suggestions; and
saving the mismatches and suggestions to a log file.

2. The method of claim 1, wherein the determining the mismatches comprises:
identifying the mismatches between a schematic design and its corresponding layout by analyzing context of the design notes;
extracting the design notes;
providing a contextual mapping of the output including mapping the extracted design notes to the corresponding layout elements; and
determining that the layout adheres to an intent the schematic design.

3. The method of claim 2, wherein the design notes comprise at least one of electrical specifications, component requirements or connectivity rules.

4. The method of claim 2 or 3, wherein the contextual mapping comprises visualizing relationships between the design notes and the layout data.

5. The method of one of claims 2 to 4, further comprising determining any discrepancy between the extracted design notes and the corresponding layout elements and making a comparison between an expected design and parameters of the corresponding layout elements.

6. The method of claim 5, further comprising flagging the discrepancies that are above a predefined threshold.

7. The method of one of claims 1 to 6, further comprising reporting the mismatched and matched output and the suggestions.

8. The method of claim 7, wherein the reporting comprises at least one of:
generating a visual and text based report to implement the suggestions; and
providing a graphic layout of the suggestion.; and
applying formatting rules to highlight critical issues in the integrated circuit.

9. The method of one of claims 1 to 8, wherein the generating suggestions comprises:
performing a contextual analysis of at least the design notes;
determining root causes of any discrepancies including at least tolerance mismatches and manufacturing variations; and
generating tailored actionable suggestions related to the discrepancies.

10. A computer program product comprising one or more computer readable storage media having program instructions collectively stored on the one or more computer readable storage media, the program instructions are executable to:
parse guidance text notes in a schematic into rules;
check the rules against and a corresponding layout to determine matches and mismatches between the rules and the corresponding layout; and
generate a report showing whether the parsed guidance text notes are complied within the corresponding layout.

11. The computer program product of claim 10, further comprising at least one of:
real-time integration of the schematic into a layout environment, linked to specific integrated circuits; and/or
continuous verification of layout adherence to design recommendations; and/or
predictive feedback on consequences of not meeting design recommendations; and/or
generation and display of design notes alongside relevant layout objects.

12. A system comprising:
a processor, a computer readable memory, one or more computer readable storage media, and program instructions collectively stored on the one or more computer readable storage media, the program instructions are executable to:
extract schematic design notes of an integrated circuit;
parse a netlist and determine layout geometries of the integrated circuit;
compare the layout geometries to the schematic notes to determine mismatches and matches between the layout geometries and the schematic notes; and
align design intent with the schematic design based on the comparing of the layout geometries to the schematic notes.

13. The system of claim 12, wherein the comparing of the layout geometries to the schematic notes comprises utilizing a cross-comparison algorithm tracking for mismatches between the layout geometries and an intended design.

14. The system of claim 12 or 13, wherein the extracting comprises extracting critical design specifications including layout data of the integrated circuit.

15. The system of claim 14, wherein the critical design specifications include at least one of component placements or layer information and other layout information.
